Europäisches Patentamt

European Patent Office

Office européen des brevets

(19)

(11) Numéro de publication: **0 128 077**
**B1**

(12) # FASCICULE DE BREVET EUROPEEN

(45) Date de publication du fascicule du brevet:
27.08.86

(21) Numéro de dépôt: **84401045.4**

(22) Date de dépôt: **18.05.84**

(51) Int. Cl.⁴: **F 16 B 37/00,** B 23 P 19/00,
F 16 B 39/34

(54) **Boulon à auto-centrage.**

(30) Priorité: **20.05.83 FR 8308437**

(43) Date de publication de la demande:
**12.12.84 Bulletin 84/50**

(45) Mention de la délivrance du brevet:
**27.08.86 Bulletin 86/35**

(84) Etats contractants désignés:
**BE DE GB IT NL SE**

(56) Documents cités:
**FR - A - 2 106 994**
**FR - A - 2 142 201**
**US - A - 4 256 421**

(73) Titulaire: **SIMMONDS S.A:, 5 rue Michelet,**
**F-92152 Suresnes Cedex (FR)**

(72) Inventeur: **Frerejacques, Jean-Claude, Route de**
**Nogent-le-Bernard, F-72580 Saint-Cosme-en-Vairais**
**(FR)**

(74) Mandataire: **Durand, Yves Armand Louis et al, Cabinet Z.**
**Weinstein 20, Avenue de Friedland, F-75008 Paris (FR)**

ACTORUM AG

## Description

La présente invention a essentiellement pour objet un boulon à auto-centrage et du type comprenant une vis et un écrou dont la partie supérieure contient une rondelle auto-freinante en une matière synthétique quelconque.

On connaît déjà des boulons à écrou auto-freinant. C'est ainsi que le document FR-A-2.142.201 décrit un écrou contenant à sa partie supérieure une rondelle en matière plastique du type polyamide ou nylon susceptible de réaliser un auto-freinage de l'écrou lors du vissage.

Par ailleurs, lorsque l'on veut effectuer le vissage d'une vis sur un écrou de manière manuelle ou automatique, il y a un risque de détérioration des filetages de la vis et de l'écrou par le fait que la présentation de la vis n'est pas effectuée exactement dans l'axe de l'écrou, de sorte que le vissage s'effectue incorrectement et détériore les filetages. Pour remédier à cet inconvénient, on a déjà proposé, comme décrit dans les documents FR-A-2.106.994 ou US-A-4.256.421, de munir la vis d'un embout permettant le guidage axial de cette vis dans l'écrou.

Cependant, il n'a pas encore été proposé de résoudre le problème de l'auto-centrage d'un boulon à écrou auto-freinant au moyen de la rondelle-frein incorporée à cet écrou. La présente invention a pour but de résoudre ce problème en proposant un boulon permettant le centrage automatique d'une vis lors de son introduction dans l'écrou auto-freinant.

Ainsi, comme on le comprend déjà, la vis se présentera nécessairement dans l'axe de l'écrou avant le vissage, puisque l'élément prolongeant la partie filetée de la vis sera positivement et axialement guidé en passant dans l'anneau, lequel sera éjecté du corps d'écrou par la vis lors du vissage.

Selon une autre caractéristique de l'invention, l'anneau venant de moulage avec la rondelle est relié à celle-ci par un voile de matière frangible.

On ajoutera encore que la périphérie interne de l'anneau ainsi que l'élément ou bout-pilote prolongeant la partie ou l'extrémité filetée de la vis sont chanfreinés.

Ainsi, la coopération des chanfreins de l'anneau et du bout-pilote permettront un centrage automatique en début d'introduction de la vis dans l'écrou.

Selon une autre caractéristique de l'invention, l'élément ou bout-pilote précité est raccordé à l'extrémité filetée de la vis par un épaulement conique apte à séparer l'anneau de la rondelle.

On précisera encore ici que la voile de matière frangible reliant la rondelle à l'anneau est située sensiblement à mi-épaisseur de ladite rondelle et de son anneau associé.

Suivant un mode de réalisation préféré, l'anneau présente un profil de section transversale droite sensiblement en forme de losange.

L'invention vise également un assemblage de pièces quelconques utilisant un boulon répondant à l'une ou l'autre des caractéristiques susmentionnées.

Mais d'autres avantages et caractéristiques de l'invention apparaîtront mieux dans la description détaillée qui suit et qui se réfère aux dessins annexés, donnés uniquement à titre d'exemple, et dans lesquels:

La figure 1 est une vue en coupe axiale d'un écrou et d'une vis représentée partiellement et avant introduction dans l'écrou.

La figure 2 est une vue analogue à la précédente, mais montrant la vis en début d'introduction dans l'écrou.

La figure 3 est encore une vue en coupe axiale de l'écrou et de la vis, mais montrant cette dernière en fin de vissage dans l'écrou, c'est-à-dire lorsque l'anneau a été séparé de la rondelle auto-freinante; et

la figure 4 illustre schématiquement et en coupe axiale un boulon conforme aux principes de l'invention et utilisant un écrou classique, c'est-à-dire sans rondelle auto-freinante incorporée.

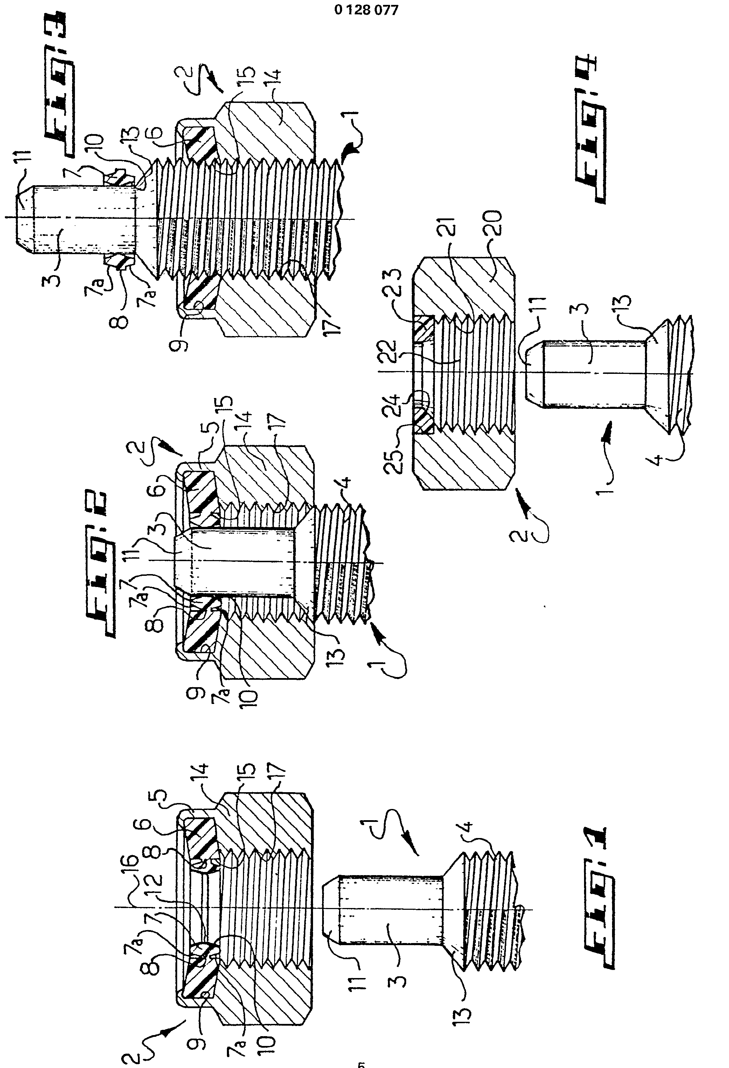

Suivant l'exemple de réalisation illustré par les figures 1 à 3, un boulon conforme à l'invention comprend essentiellement un organe extérieurement fileté ou vis 1 et un écrou 2, la vis 1 comportant un élément ou bout-pilote 3 prolongeant l'extrémité filetée 4 de la vis, tandis que l'écrou 2 contient à sa partie supérieure 5 une rondelle auto-freinante 6 à laquelle est associé de manière séparable un anneau 7 intérieurement concentrique à ladite rondelle.

Suivant une réalisation préférée, la rondelle 6 et son anneau associé 7 sont obtenus par moulage en une seule pièce, et cela de manière que l'anneau soit relié à la rondelle par une partie amincie ou voile de matière frangible 8. Cette partie amincie ou voile 8 présente une configuration annulaire et, comme on le voit bien sur les figures, est située sensiblement à mi-épaisseur de la rondelle 6 et de son anneau associé 7. Comme cela est connu en soi, la rondelle 6 est de préférence réalisée en une matière synthétique, telle que polyamide par exemple, et contenue dans un logement annulaire 9 formé à la partie supérieure 5 de l'écrou 2.

Un chanfrein 10 est prévu sur la périphérie interne de l'anneau 7, tandis que le bout-pilote 3 de préférence cylindrique et lisse comporte lui aussi, à son extrémité, un chanfrein 11 qui est de nature à faciliter le centrage de la vis 1 dans l'écrou 2, comme on le décrira plus loin à propos du fonctionnement.

Le bout-pilote 3 de la vis 1 présente un diamètre inférieur à celui de l'extrémité filetée 4 de la vis 1, ledit diamètre étant très légèrement inférieur à celui constitué par la périphérie interne 12 de l'anneau 7 associé à la rondelle 6.

Le bout-pilote 3 de la vis 1 est raccordé à l'extrémité filetée 4 par un épaulement conique 13 susceptible de rompre et d'éjecter l'anneau 7 du corps d'écrou 14, comme on l'expliquera plus loin. A cet égard, on notera que l'épaulement 13 peut avoir toute autre forme que conique, sans sortir du cadre de l'invention.

Revenant à l'anneau 7 visible sur les figures 1 à 3, on voit qu'il présente un profil de section droite sensiblement en forme de losange. Le chanfrein 10 décrit précédemment constitue l'un des côtés de ce losange. On a repéré en 7a sur les figures 1 et 3 deux côtés adjacents de ce losange et à l'intersection desquels se situe précisément le voile de matière annulaire et frangible 8.

La périphérie interne 15 de la rondelle 6 s'étend vers l'axe 16 de l'écrou 2 un petit peu au-delà du filetage 17 de l'écrou, de façon à permettre l'auto-freinage de l'écrou sur la vis, comme cela est en soi connu.

Mais un boulon conforme aux principes de l'invention pourrait parfaitement utiliser un écrou 20 du type classique, comme on le voit sur la figure 4, c'est-à-dire un écrou tout simplement muni d'un filetage intérieur 21 sans rondelle auto-freinante.

Dans ce cas-là, on monte, par exemple à force, dans un chambrage 25 de l'écrou 20, et à sa partie supérieure, un anneau 23 en une matière synthétique appropriée et qui peut être séparé ou chassé de l'écrou 20 par l'épaulement 13 de la vis 1, après que ledit anneau a évidemment joué son rôle d'élément de guidage et de centrage de ladite vis à l'introduction dans l'écrou. La vis 1 comporte dans ce cas-là un bout-pilote 3, exactement comme cela a été décrit précédemment. Par ailleurs, l'anneau amovible 23 peut comporter un chanfrein annulaire 24 coopérant avec le chanfrein 11 du bout-pilote 3 de la vis 1 de façon à faciliter le centrage.

On décrira maintenant le fonctionnement du mode de réalisation de boulon représenté sur les figures 1 à 3.

La vis 1 étant tenue par un robot (non représenté) est présentée sensiblement dans l'axe 16 de l'écrou 2, comme on le voit bien sur la figure 1.

Ensuite, comme on le voit sur la figure 2, la vis 1 est introduite dans l'orifice fileté de l'écrou 2, de sorte que le bout-pilote 3 se centre grâce à la coopération des chanfreins 10 et 11, et est guidé en passant au travers de l'anneau 7. On est alors certain d'être dans l'axe exact de vissage, de sorte que le filetage de l'extrémité 4 de la vis 1 s'engagera correctement dans le filetage 17 de l'écrou 2, sans aucun risque de détérioration des filets.

Le vissage pouvant ainsi s'effectuer et se poursuivre correctement, l'épaulement 13 viendra donc en butée contre l'anneau 7, ce qui provoquera la rupture de la liaison 8, comme on le voit bien sur la figure 3. On notera qu'à ce moment-là, la rondelle 8 jouera, par sa périphérie 15, son rôle d'auto-freinage sur la partie filetée 4 de la vis 1.

On comprend donc que l'ensemble rondelle 6-anneau 7 joue tout d'abord un rôle de centrage axial de la vis 1 par rapport à l'écrou 2, puis un rôle d'auto-freinage de l'écrou sur la vis.

On ajoutera ici que la configuration symétrique de la rondelle 6 et de son anneau associé 7 permet avantageusement le montage de ladite rondelle dans le logement 9 par l'une ou l'autre de ses faces, ce qui ne nécessite par conséquent aucune précaution particulière d'orientation de la rondelle lors de son montage à la partie supérieure 5 de l'écrou.

Le fonctionnement du mode de réalisation visible sur la figure 4 est sensiblement le même que celui qui vient d'être décrit, à cela près que la fonction d'auto-freinage est ici absente, puisque la rondelle 6 n'existe pas.

On dira seulement ici que la vis 1 est centrée dans l'écrou 20 par passage du bout-pilote 3 dans l'anneau 23 qui est ensuite éjecté par l'épaulement 13 de ladite vis.

On a donc réalisé suivant l'invention un boulon perfectionné et manœuvrable par un robot sans risque de vissage incorrect ou de détérioration du filetage de la vis et/ou de l'écrou de ce boulon.

Bien entendu, l'invention n'est nullement limitée aux modes de réalisation décrits et illustrés qui n'ont été donnés qu'à titre d'exemple.

C'est ainsi que l'anneau 7 pourrait être relié de manière séparable à la rondelle 6 par tout autre moyen que par un voile de matière frangible.

L'invention comprend donc tous les équivalents techniques des moyens décrits ainsi que leurs combinaisons si celles-ci sont effectuées suivant son esprit.

## Revendications

1. Boulon comprenant une vis et un écrou permettant l'assemblage de pièces quelconques et dans lequel la vis (1) comprend une partie filetée (4) tandis que l'écrou (2) contient à sa partie supérieure (5) et opposée à sa face d'appui une rondelle auto-freinante (6) en une matière quelconque, telle que polyamide par exemple, caractérisé en ce que la rondelle (6) comporte un anneau (7) intérieurement concentrique à la rondelle et associé à celle-ci d'une manière séparable, cet anneau coopérant avec un élément (3) prolongeant la partie filetée (4) de la vis et possédant un diamètre inférieur à celui de ladite partie filetée, pour permettre le guidage axial de la vis (1) lors de son introduction dans l'écrou (2).

2. Boulon selon la revendication 1, caractérisé en ce que l'anneau (7), venant de moulage avec la rondelle (6), est relié à celle-ci par une partie amincie ou voile de matière frangible (8).

3. Boulon selon la revendication 1 ou 2, caractérisé en ce que la périphérie interne (12) de l'anneau (7) ainsi que l'élément ou bout-pilote (3) prolongeant la partie ou extrémité filetée (4) de la vis (1) sont chanfreinés (10, 11).

4. Boulon selon l'une des revendications 1 à 3, caractérisé en ce que l'élément ou bout-pilote (3) est raccordé à l'extrémité filetée (4) de la vis (1) par un épaulement conique (13) apte à séparer l'anneau (7) de la rondelle (6).

5. Boulon selon la revendication 2, caractérisé en ce que le voile de matière frangible (8) reliant la rondelle (6) à l'anneau (7) est situé sensiblement à mi-épaisseur de ladite rondelle et de son anneau associé.

6. Boulon selon l'une des revendications précédentes, caractérisé en ce que l'anneau (7) présente un profil de section transversale droite sensiblement en forme de losange.

7. Utilisation d'au moins un boulon selon l'une quelconque des revendications précédentes pour réaliser l'assemblage de pièces quelconques.

## Patentansprüche

1. Bolzen mit einer Schraube und einer Mutter zum Zusammenbau von beliebigen Teilen, bei dem die Schraube (1) einen Gewindebereich (4) besitzt, während die Mutter (2) in ihrem oberen Bereich (5) ihrer Auflagefläche entgegengesetzt eine sich selbsthaltende oder selbstbremsende Unterlegscheibe (6) aus einem beliebigen Stoff wie z.B. Polyamid aufweist, dadurch gekennzeichnet, dass die Scheibe (6) einen ring (7) besitzt, der innen zu der Scheibe konzentrisch ist und dieser in einer trennbaren Weise zugeordnet ist, wobei dieser Ring mit einem Element (3), das den Gewindebereich (4) der Schraube fortsetzt und einen Durchmesser besitzt, der kleiner ist als der des genannten Gewindebereiches, zusammenwirkt, um die axiale Führung der Schraube (1) bei ihrer Einführung in die Mutter (2) zu ermöglichen.

2. Bolzen nach Anspruch 1, dadurch gekennzeichnet, dass der Ring (7), der an der Scheibe (6) angeformt ist, mit dieser durch einen dünneren Bereich aus zerbrechlichem Stoff (8) verbunden ist.

3. Bolzen nach Anspruch 1 oder 2, dadurch gekennzeichnet, dass der Innenumfang (12) des Ringes (7) sowie das den Gewindebereich oder das Gewindeende (4) der Schraube (1) fortsetzende Element oder Endführer (3) abgeschrägt sind (10, 11).

4. Bolzen nach einem der Ansprüche 1 bis 3, dadurch gekennzeichnet, dass das Element oder der Endführer (3) an dem Gewindeende (4) der Schraube (1) durch eine konische Schulter (13) verbunden ist, die geeignet ist, den Ring (7) von der Scheibe (6) zu trennen.

5. Bolzen nach Anspruch 2, dadurch gekennzeichnet, dass der dünnere Bereich aus zerbrechlichem Stoff (8), der die Scheibe (6) mit dem Ring (7) verbindet, im wesentlichen in der Mitte der Dicke der genannten Scheibe und des ihr zugeordneten Ringes vorgesehen ist.

6. Bolzen nach einem der vorangehenden Ansprüche, dadurch gekennzeichnet, dass der Ring (7) ein Profil aufweist, dessen rechtwinkliger Querschnitt im wesentlichen die Form eines Rhombus hat.

7. Verwendung wenigstens eines Bolzens nach einem der vorangehenden Ansprüche zum Zusammenbau von beliebigen Teilen.

## Claims

1. A bolt including a screw and a nut allowing the assembling of any pieces and in which the screw (1) includes a threaded portion (4) whereas the nut (2) contains at its upper portion (5) opposed to its bearing face a self-locking washer (6) of any material, such as for example polyamide, characterized in that the washer (6) includes a ring (7) internally concentric with the washer and separably associated therewith, said ring cooperating with an element (3) extending the threaded portion (4) of the screw and having a smaller diameter than that of the said portion, so as to allow axial guiding of the screw (1) during its introduction into the nut (2).

2. A bolt according to claim 1, characterized in that the ring (7) moulded integral with the washer (6) is connected thereto by a thinned portion or connection of frangible material (8).

3. A bolt according to claim 1 or 2, characterized in that the internal periphery (12) of the ring (7) as well as the element or guide-end (3) extending the threaded portion or end (4) of the screw (1) are bevelled (10, 11).

4. A bolt according to one of claims 1 to 3, characterized in that the element or guide-end (3) is connected to the threaded end (4) of the screw (1) by a conical shoulder (13) apt to separate the ring (7) from the washer (6).

5. A bolt according to claim 2, characterized in that the connection of frangible material (8) connecting the washer (6) to the ring (7) is located substantially half-way up the thickness of the said washer and of its associated ring.

6. A bolt according to one of the preceding claims, characterized in that the ring (7) displays a cross-sectional profile substantially in the form of a lozenge.

7. Use of at least one bolt according to any one of the preceding claims to effect the assembling of any pieces.

Fig. 1

Fig. 2

Fig. 3

Fig. 4

0 128 077